# FASCICULE DE BREVET EUROPEEN

(11) **EP 3 210 253 B1**
(45) Date de publication et mention de la délivrance du brevet: **17.10.2018**
(21) Numéro de dépôt: 15790608.2
(22) Date de dépôt: 20.10.2015
(51) Int. Cl.: H01M 8/0606, H01M 8/04225

(54) **PROCÉDÉ DE PRODUCTION D'ÉLECTRICITE PAR UNE PILE A COMBUSTIBLE ET DISPOSITIF ASSOCIÉ**
VERFAHREN ZUM ERZEUGEN VON ELEKTRIZITÄT MIT EINER BRENNSTOFFZELLE UND ZUGEHÖRIGE VORRICHTUNG
METHOD OF GENERATING ELECTRICITY WITH A FUEL CELL AND RELATED DEVICE

(30) Priorité: 21.10.2014 FR 1460100
(43) Date de publication de la demande: 30.08.2017
(73) Titulaire: ArianeGroup SAS, 75015 Paris (FR); Safran Power Units, 31200 Toulouse (FR)
(72) Inventeur: GOUDON, Jean-Philippe, F-94700 Maisons-Alfort (FR); FOURNET, Arnaud, F-33700 Merignac (FR); YVART, Pierre, F-91610 Ballancourt sur Essonne (FR); GAUTIER, Philippe, F-91220 Le Plessis Pate (FR); SOULIE, Laurent, F-33000 Bordeaux (FR); BOUDJEMA, Fabien, 31130 Balma (FR)
(74) Mandataire: Le Roux, Martine
(86) Numéro de dépôt international: PCT/FR2015/052819
(87) Numéro de publication internationale: WO 2016/062965

(56) Documents cités:
- WO-A1-2014/065923
- FR-A1- 2 906 805
- FR-A1- 2 999 167
- FR-A1- 2 999 168
- FR-A1- 2 999 169

## Description

La présente invention concerne le fonctionnement de piles à combustible, notamment portables ou embarquées. Elle a plus précisément pour objet un procédé de production d'électricité par une pile à combustible et un dispositif associé (convenant tout particulièrement à la mise en oeuvre dudit procédé).

L'invention trouve tout particulièrement application dans le contexte de l'alimentation en hydrogène de piles à combustible de faible ou moyenne (1 à 100 watts (W)), voire plus forte (quelques kW), puissances, piles à combustible notamment utilisées dans les domaines aéronautiques et militaires, telles celles équipant les drones, celles équipant les fantassins, et celles utilisées pour l'alimentation de générateurs électriques aéronautiques de secours et de générateurs électriques aéronautiques auxiliaires. Les puissances électriques visées dans ce contexte sont généralement au moins dix fois supérieures aux puissances consommées par les appareils électriques portables, tels que les téléphones portables.

Les piles à combustible sont des sources d'énergie électrique alternatives apportant une réponse aux nouvelles exigences énergétiques et environnementales. Les piles à combustible présentent un potentiel de densité énergétique embarquée au moins 4 fois supérieur à celui des batteries au lithium. Elles ne rejettent pas de gaz à effet de serre.

La production et le stockage de l'hydrogène nécessaire à l'alimentation en fuel (hydrogène) des piles à combustible sont ainsi des problèmes techniques d'actualité, objet de nombreuses recherches.
- Le stockage permanent d'hydrogène sous pression dans des réservoirs est largement utilisé. Un tel stockage est notamment décrit dans la demande de brevet US 2006/0096993. Ce type de stockage est cependant peu apprécié en raison, d'une part, de la dangerosité de l'hydrogène sous pression et, d'autre part, des opérations de maintenance et de contrôle associées. La masse des réservoirs sous pression est aussi un handicap pour les applications mobiles.
- Une voie développée pour la production d'hydrogène est basée sur l'utilisation de matériaux solides pyrotechniques générateurs d'hydrogène par combustion (en fait générateurs de gaz hydrogénés à forte teneur en hydrogène (au moins 70 % en volume (voir ci-après)) par combustion). Elle permet de s'affranchir du problème de stockage permanent de fluide (liquide ou gazeux). Elle est particulièrement intéressante dans la mesure où lesdits matériaux solides pyrotechniques présentent une grande stabilité en conditions de stockage et une grande simplicité d'emploi.

De tels matériaux solides pyrotechniques générateurs d'hydrogène ont notamment été décrits dans les demandes de brevet EP 1 249 427, EP 1 405 823, EP 1 405 824, EP 1 496 035, EP 2 014 631 et EP 2 265 545. Ils se présentent sous la forme de blocs, de disques, de pastilles, de granulés ou de grains. Leur composition renferme un composant réducteur hydrogéné de type hydrure inorganique, borazane ou polymère de l'aminoborane (polyaminoborane) et un composant oxydant inorganique. Leur combustion génère, avec un bon rendement (∼ 11 à 13 % théorique en masse), de l'hydrogène. Leur température de combustion (∼ 800 K à 1200 K) est suffisamment élevée pour que la réaction soit auto-entretenue après l'allumage. La combustion auto-entretenue de ces matériaux est favorisée par la mise en pression dans la chambre de combustion. On a vu ci-dessus que de tels matériaux produisent en fait des gaz hydrogénés, à forte teneur en hydrogène (= renfermant au moins 70 % en volume d'hydrogène).

L'utilisation de tels matériaux solides pyrotechniques, pour alimenter en hydrogène une pile à combustible, doit être maîtrisée, voire optimisée, en référence à de nombreuses exigences. La pile à combustible requérant le plus souvent une alimentation en hydrogène à température modérée (température généralement comprise entre 80°C et 220°C ; température inférieure à 350 K (environ 100°C) pour les piles dites basse température), pour ménager la membrane de ladite pile, le gaz hydrogéné fourni par le matériau pyrotechnique solide doit être refroidi. De plus, les piles doivent être alimentées en hydrogène à des surpressions faibles (idéalement de quelques millibars jusqu'à 5 bars) par rapport à la pression ambiante (atmosphérique) (compatibles avec la pile), et les matériaux pyrotechniques solides fournissant des gaz hydrogénés sous pression, lesdits gaz doivent donc être dépressurisés avant d'être fournis à la pile. Enfin, il est opportun, voire indispensable, que les gaz alimentant la pile présentent à la fois un faible taux de particules (il est ainsi recommandé de disposer entre le matériau pyrotechnique et la pile un filtre à particules) et un faible taux en espèces gazeuses (CO, NH₃, Cl₂, H₂S) susceptibles d'empoisonner le catalyseur de la pile (il est ainsi recommandé de disposer entre le matériau pyrotechnique et la pile un filtre chimique).

L'utilisation de ces matériaux pyrotechniques solides, très performants en termes de production de gaz hydrogénés et intéressants en ce qu'ils produisent les gaz hydrogénés de façon auto-entretenue après leur allumage, requiert donc des moyens de dépressurisation, de filtration (particulaire et chimique) et éventuellement de refroidissement des gaz hydrogénés produits avant la délivrance de ceux-ci à la pile. Enfin, quoique très stables (peu sensibles), ces matériaux pyrotechniques solides présentent néanmoins un risque d'auto-inflammation s'ils sont soumis à une sollicitation thermique et/ou mécanique accidentelle. Leur conditionnement et utilisation demandent donc des précautions. Ces contraintes sécuritaires peuvent devenir rédhibitoires au-delà d'une certaine masse de matériau pyrotechnique. De manière générale, tous moyens associés à l'utilisation de ces matériaux pyrotechniques solides, moyens de dépressurisation, de filtration, de refroidissement, et relatifs à la sécurité, a un impact défavorable sur la masse, l'encombrement et le coût du dispositif en cause.

L'utilisation de matériaux solides, non pyrotechniques, générateurs d'hydrogène (en fait générateurs de gaz hydrogénés à forte teneur en hydrogène (au moins 85 % en volume (voir ci-après)), est aussi connue pour alimenter en hydrogène (en gaz hydrogénés) une pile à combustible. Ces matériaux solides, non pyrotechniques, libèrent un gaz hydrogéné par décomposition thermique. Ces matériaux ne présentent pas les contraintes, notamment sécuritaires, des matériaux pyrotechniques (voir ci-dessus) mais il est nécessaire, théoriquement au moins au début de leur décomposition, de leur apporter de la chaleur pour qu'ils libèrent leur hydrogène.

Il est ainsi connu d'utiliser le borazane (ou « ammonia borane »), comme solide précurseur, dans la production d'hydrogène (solide précurseur qui génère un gaz hydrogéné (à forte teneur en hydrogène) par décomposition thermique).

Ledit borazane, de formule chimique NH₃BH₃, existe sous la forme d'une poudre blanche cristalline et présente le potentiel unique de contenir 19,6 % en masse d'hydrogène. Il se positionne donc comme un candidat particulièrement intéressant pour le stockage solide de l'hydrogène. Ledit borazane se décompose en trois étapes et libère de l'hydrogène à chacune de ces trois étapes. Ces trois étapes sont exothermiques mais la première est précédée ou débute toutefois par la fusion endothermique du borazane. De par le caractère endothermique de cette fusion (que l'on englobe ou non dans la première étape de décomposition), il est impératif de fournir de la chaleur au borazane pour le démarrage de sa décomposition. De la chaleur est en fait opportunément fournie tout au long de la décomposition thermique du borazane (afin d'éviter toute baisse de température de celui-ci, susceptible d'entrainer l'arrêt de la décomposition en cours).

La chaleur nécessaire au démarrage (et à l'entretien) de la décomposition de ces matériaux solides (on a parlé ci-dessus du borazane : matériau solide générateur d'hydrogène préféré) mais l'homme du métier connait d'autres matériaux solides générateurs d'hydrogène, notamment les polyaminoboranes et les hydrures) peut être fournie soit en récupérant de la chaleur produite par la pile en fonctionnement (l'homme du métier sait qu'une pile à combustible dégage inexorablement une quantité substantielle de chaleur lors de son fonctionnement), soit en récupérant une partie de l'énergie électrique fournie par la pile (effet Joule). Cela suppose toutefois que la pile soit en fonctionnement.

La récupération de chaleur (comme celle d'électricité) produite par la pile pour la décomposition thermique du matériau générateur d'hydrogène pose donc le problème de l'amorçage (du démarrage) ou mise en régime de la pile. En fait :
- soit la pile doit être alimentée par une source externe d'hydrogène afin d'être mise en fonctionnement pour pouvoir produire la chaleur nécessaire au démarrage de la décomposition du matériau générateur d'hydrogène, le procédé étant ensuite auto-entretenu,
- soit il est nécessaire de fournir au matériau générateur d'hydrogène, pour démarrer sa décomposition, de la chaleur produite par une source externe d'énergie, le procédé étant ensuite auto-entretenu.

A ce jour, à la connaissance de la Demanderesse, il n'a toujours pas été proposé de solution satisfaisante au problème technique de l'amorçage d'un tel procédé : procédé de fonctionnement d'une pile à combustible alimentée en hydrogène provenant de la décomposition thermique d'un matériau générateur d'hydrogène.

La présente invention propose une solution originale, particulièrement satisfaisante, à ce problème technique de l'amorçage d'un tel procédé (problème technique de la mise en régime de la pile). Elle propose, plus généralement, un procédé et un dispositif (convenant à la mise en oeuvre dudit procédé), pour la production d'électricité par une pile à combustible. Ledit procédé est particulièrement avantageux en ce que sa mise en oeuvre ne requiert que des sources solides d'hydrogène et en ce qu'il est adapté aux piles à combustible fonctionnant à basse (à moins de 100°C, par exemple à environ 80°C) et haute (entre 100 et 220°C) températures, tout particulièrement aux piles à combustible fonctionnant à haute température (voir ci-après : la phase de mise en régime (de démarrage) de la pile requiert un refroidissement des gaz hydrogénés générés par combustion d'une intensité moindre (par rapport à celle du refroidissement requis pour les piles fonctionnant à basse température) et la pile en fonctionnement met à disposition plus de chaleur pour la génération de gaz hydrogénés par décomposition thermique).

Selon son premier objet, la présente invention concerne donc un procédé pour la production d'électricité par une pile à combustible. De façon conventionnelle, ledit procédé comprend successivement :
- une phase de mise en régime de ladite pile, et
- un fonctionnement en régime stable de ladite pile, au cours duquel ladite pile, alimentée en gaz hydrogéné, produit de l'électricité et de la chaleur.

Ladite phase de mise en régime et ledit fonctionnement « associés » sont, de façon caractéristique, successivement mis en oeuvre comme suit :
- pour sa mise en régime, la pile est alimentée en un gaz hydrogéné, renfermant au moins 70 % en volume d'hydrogène, généré par combustion auto-entretenue d'au moins un chargement pyrotechnique solide générateur de gaz hydrogéné ; puis
- suite à cette mise en régime, durant son fonctionnement en régime stable (au cours duquel elle produit électricité et chaleur), ladite pile est alimentée en un gaz hydrogéné, renfermant au moins 85 % en volume d'hydrogène, généré par décomposition thermique d'au moins un chargement solide générateur de gaz hydrogéné ; une partie de la chaleur produite par ladite pile en fonctionnement étant transférée audit au moins un chargement solide pour le démarrage et l'entretien de sa décomposition thermique.

Ainsi, dans un contexte d'utilisation de matériaux solides, non pyrotechniques, générateurs de gaz hydrogénés par décomposition thermique, pour faire fonctionner une pile à combustible (les gaz hydrogénés résultant de cette décomposition thermique alimentant ladite pile), la présente invention prévoit :
1) une phase de mise en régime (préalable) de ladite pile originale, basée sur l'utilisation de matériaux solides, pyrotechniques, générateurs de gaz hydrogénés par combustion auto-entretenue (et non pas sur un apport, par une source externe, de chaleur auxdits matériaux solides, non pyrotechniques, générateurs de gaz hydrogénés pour au moins démarrer leur décomposition thermique). En d'autres termes, dans le cadre du procédé de l'invention, la pile est mise en régime avec au moins un chargement pyrotechnique solide générateur de gaz hydrogéné par combustion auto-entretenue (et elle fonctionne ensuite avec au moins un chargement (non pyrotechnique) solide générateur de gaz hydrogéné par décomposition thermique) ; et
2) l'utilisation d'une partie de la chaleur produite par la pile en fonctionnement pour successivement démarrer et entretenir la décomposition thermique du au moins un chargement (non pyrotechnique) solide générateur de gaz hydrogéné par décomposition thermique. On a vu ci-dessus que de la chaleur est assurément nécessaire au démarrage de la décomposition thermique (voir la fusion endothermique mentionnée). Il s'est avéré aussi avantageux, voire indispensable, pour entretenir une décomposition thermique en continu, de manière fiable et stable, de fournir de la chaleur pendant toute la décomposition thermique.

On a compris que, pendant le fonctionnement en régime stable de la pile, la quantité de chaleur récupérée de la pile (évidemment liée à la quantité de chaleur récupérable, i.e. au type de pile en cause : plus la pile fonctionne à haute température, plus il est possible de récupérer de la chaleur) correspond à la quantité de chaleur utilisée pour la décomposition thermique (le démarrage de celle-ci et son entretien) du au moins un chargement non pyrotechnique solide en cause. On conçoit donc qu'il existe une corrélation entre la température de fonctionnement de la pile et la température de décomposition thermique dudit au moins un chargement, que le type de pile et le type de chargement associés sont liés. Ainsi, plus la température de fonctionnement de la pile est élevée, plus il est possible de pousser loin la décomposition thermique d'un chargement, présentant une température de décomposition adéquate ; ainsi, avec des températures de fonctionnement de la pile élevées, il est possible d'utiliser des chargements se décomposant à des températures élevées.

La seconde étape du procédé de l'invention est ainsi mise en oeuvre sans faire appel à des moyens externes (pour fournir l'énergie nécessaire à la décomposition thermique du au moins un chargement non pyrotechnique).

Il est par ailleurs particulièrement avantageux de refroidir la pile en fonctionnement en valorisant la chaleur récupérée (en utilisant ladite chaleur pour initier et entretenir la décomposition thermique). La pile en fonctionnement, refroidie de par ce transfert de chaleur (au au moins un chargement non pyrotechnique), ne l'est généralement pas suffisamment. Il convient encore de la refroidir de façon conventionnelle. On conçoit toutefois l'intérêt de la mise en oeuvre d'un refroidissement conventionnel de moindre amplitude (d'un refroidissement « allégé »).

Des chargements pyrotechniques et non pyrotechniques, générant, respectivement, successivement, par combustion auto-entretenue des gaz hydrogénés renfermant au moins 70 % en volume d'hydrogène et par décomposition thermique des gaz hydrogénés renfermant au moins 85 % en volume d'hydrogène, sont connus *per se* (voir l'introduction du présent texte). On propose ci-après des précisions à leur sujet.

Comme indiqué ci-dessus, le procédé de l'invention ne fonctionne qu'avec des sources solides d'hydrogène. De plus, 1) ledit procédé n'utilise une source solide pyrotechnique d'hydrogène (comprenant au moins un oxydant et générant donc de l'hydrogène par combustion) que pour son démarrage. On comprend que la masse de ladite source solide pyrotechnique d'hydrogène est donc limitée (réduite avantageusement au juste nécessaire pour l'amorçage de la pile) ; et 2) pour son fonctionnement en régime stable, ledit procédé utilise une source solide d'hydrogène qui ne renferme pas d'oxydant et qui présente donc des risques d'auto-inflammation minimes. En cela, le procédé de l'invention est, du point de vue sécuritaire, particulièrement avantageux.

Les gaz hydrogénés générés (successivement par combustion auto-entretenue et par décomposition thermique), pour convenir à l'alimentation de la pile à combustible en cause, doivent généralement être traités, en référence à leur température, leur pression, leur teneur en particules et/ou leur teneur en espèces gazeuses poisons pour le catalyseur de la pile. Les traitements en cause sont des traitements conventionnels, adaptés au type de pile en cause.

Ainsi, généralement, le procédé de l'invention comprend :
- dans sa phase de mise en régime :
   + la combustion auto-entretenue d'au moins un chargement pyrotechnique solide pour générer le gaz hydrogéné renfermant au moins 70 % en volume d'hydrogène ;
   + le traitement dudit gaz hydrogéné généré par combustion auto-entretenue pour qu'il convienne à l'alimentation de la pile ; et
   + l'alimentation de ladite pile avec ledit gaz hydrogéné généré traité ;
   et
- lors du fonctionnement de la pile en régime stable :
   + la décomposition thermique, avec une partie de la chaleur produite par ladite pile, dudit au moins un chargement solide, pour générer le gaz hydrogéné renfermant au moins 85 % en volume d'hydrogène ;
   + le traitement dudit gaz hydrogéné généré par décomposition thermique pour qu'il convienne à l'alimentation de ladite pile ; et
   + l'alimentation de ladite pile avec ledit gaz hydrogéné généré traité.

Au vu des propos ci-dessus, on a compris que les traitements en cause des gaz hydrogénés générés (pyrotechniquement puis non pyrotechniquement) sont *a priori* seulement susceptibles d'être du type refroidissement, dépressurisation, filtration particulaire et filtration chimique. Indépendamment, ils ne sont pas mis en oeuvre ou ils le sont, dans des conditions plus ou moins sévères, en fonction de la qualité des gaz générés et des conditions de fonctionnement de la pile.

On peut indiquer, de manière générale, que le traitement du gaz hydrogéné produit par combustion auto-entretenue consiste essentiellement en un refroidissement, une dépressurisation, une filtration chimique et une filtration particulaire et que le traitement du gaz hydrogéné produit par décomposition thermique comprend au moins une filtration chimique. On peut indiquer plus précisément ce qui suit.

Selon une variante, la pile à combustible concernée fonctionne à haute température, i.e. conventionnellement entre 100 et 220°C. Il peut notamment s'agir d'une pile de type PEMFC (« proton exchange membrane fuel cell » ou «polymere electrolyte membrane fuel cell », pile à combustible à membrane échangeuse de protons ou à membrane électrolyte polymère) haute température, fonctionnant, de façon optimale, à 160°C. Le traitement du gaz hydrogéné, produit par combustion auto-entretenue, pour l'alimentation d'une telle pile, pendant sa phase de mise en régime, consiste alors essentiellement en un refroidissement (nécessaire pour abaisser la température des gaz de combustion générés à une température convenant au fonctionnement de la pile haute température, mais assurément d'une amplitude moindre que le refroidissement nécessaire pour abaisser la température de gaz de combustion générés à une température convenant au fonctionnement d'une pile basse température (voir ci-après)), une dépressurisation (nécessaire pour abaisser la pression des gaz de combustion générés à une pression convenant à la pile), une filtration chimique et une filtration particulaire. En effet, le gaz hydrogéné produit par combustion est un gaz, chaud, sous pression, chargé en espèces gazeuses poisons et en particules. Il convient donc de le refroidir, de le dépressuriser et de le filtrer chimiquement et mécaniquement. Il requiert pour son refroidissement, dans ce contexte d'une pile fonctionnant à haute température, des dispositifs moins encombrants que ceux requis dans le contexte d'une pile basse température. Pour ce qui concerne le traitement du gaz hydrogéné, produit par décomposition thermique, pour l'alimentation d'une telle pile, pendant son fonctionnement en régime stable, il s'agit d'un traitement plus léger. Ledit traitement comprend au moins une filtration chimique (en référence à l'élimination des sous-produits de décomposition du au moins un composant réducteur hydrogéné utilisé, du borazane notamment). Il ne comprend pas nécessairement de dépressurisation (il est possible de produire les gaz à la pression atmosphérique en gérant l'apport de chaleur pour la décomposition thermique), il ne comprend pas généralement de refroidissement (les gaz n'étant pas générés très chauds) et il ne comprend pas de filtration particulaire (dans la mesure où les gaz hydrogénés générés ne renferment pas ou peu de particules).

Selon une autre variante, la pile à combustible concernée fonctionne à basse température (à moins de 100°C). Il peut notamment s'agir d'une pile de type PEFMC basse température fonctionnant, de façon optimale, à 80°C. Le traitement du gaz hydrogéné, produit par combustion auto-entretenue, pour l'alimentation d'une telle pile, pendant sa phase de mise en régime, consiste alors aussi essentiellement en un refroidissement (d'une amplitude plus conséquente que le refroidissement requis dans un contexte de pile haute température (voir ci-dessus)), une dépressurisation, une filtration chimique et une filtration particulaire. En effet, comme indiqué ci-dessus, le gaz hydrogéné produit par combustion est un gaz, chaud, sous pression, chargé en particules et en espèces gazeuses poisons. Pour ce qui concerne le traitement du gaz hydrogéné, produit par décomposition thermique, pour l'alimentation d'une telle pile, pendant son fonctionnement en régime stable, on peut se référer au paragraphe ci-dessus.

Les deux variantes précisées ci-dessus ne sont pas limitatives. La mise en oeuvre du procédé de l'invention avec des piles à combustible fonctionnant à plus hautes températures (>220°C) n'est pas exclu du cadre de l'invention. Les traitements des gaz hydrogénés générés, notamment leur refroidissement, sont évidemment à adapter à la pile en cause. On rappelle incidemment que la nature du chargement solide générateur de gaz hydrogéné par décomposition thermique est aussi « adaptée à » ladite pile en cause (en fait, à sa température de fonctionnement).

On indique ci-après, de façon nullement limitative, un ordre « logique » préconisé de mise en oeuvre des traitements identifiés ci-dessus, obligatoires ou non. Après génération des gaz hydrogénés par combustion auto-entretenue ou décomposition thermique, on préconise 1) une filtration particulaire (obligatoire pour les gaz générés par combustion), 2) un refroidissement (d'une amplitude adaptée à la pile en cause), 3) une dépressurisation (= détente ; obligatoire pour les gaz générés par combustion, nécessaire ou non pour les gaz générés par décomposition thermique), et 4) une filtration chimique (obligatoire pour les gaz générés par combustion et pour les gaz générés par décomposition thermique).

On peut incidemment noter ici que, de manière générale, tous les moyens nécessaires à la mise en oeuvre de ces traitements pénalisent le dispositif global, en termes de masse, de complexité et de coût. De ce point de vue, le procédé de l'invention est intéressant en ce qu'il ne requiert, pour sa mise en oeuvre, que de tels moyens « allégés », dans la mesure où c'est principalement une décomposition thermique qui est en cause ; la combustion auto-entretenue (avec oxydant(s) dans le chargement concerné) n'étant mise en oeuvre que pour le démarrage. C'est ainsi toujours une faible quantité de gaz hydrogéné généré par combustion qu'il convient de filtrer mécaniquement, de refroidir (avec une forte amplitude), de dépressuriser et de filtrer chimiquement. En tout état de cause, il est aussi intéressant d'avoir un fonctionnement en régime stable, sans oxydant ; les risques d'auto-inflammation sont ainsi quasi nuls.

On conçoit par ailleurs bien évidemment que des mêmes moyens, utiles à la mise en oeuvre de l'un quelconque de ces traitements, peuvent être utilisés successivement pour traiter les gaz hydrogénés générés pyrotechniquement puis ceux générés non pyrotechniquement.

On se propose maintenant de donner des précisions sur les chargements pyrotechniques (A) et non pyrotechniques (B) convenant à la mise en oeuvre du procédé de l'invention.

• On a indiqué que, pour la phase de mise en régime de la pile, un gaz hydrogéné, renfermant au moins 70 % en volume d'hydrogène (gaz hydrogéné convenant à l'alimentation de piles à hydrogène), est généré par combustion auto-entretenue d'au moins un chargement pyrotechnique solide générateur de gaz hydrogéné. Ces chargements pyrotechniques solides générateurs de gaz hydrogénés sont ci-après référencés chargements A.

Lesdits chargements A peuvent consister en des chargements de l'art antérieur, constitués d'au moins un produit (une charge)
- de type conventionnel, i.e. de type bloc (de tels blocs monolithes ont généralement une masse de quelques dizaines de grammes à quelques centaines de grammes. Ils présentent généralement un diamètre (équivalent) et une épaisseur (longueur) supérieures à 3 cm. Ils peuvent notamment consister en des blocs substantiellement cylindriques présentant une hauteur de 50 à 100 mm et un diamètre équivalent de 50 à 100 mm),
   de type disque (de tels disques, présentant une épaisseur « faible » associée généralement à un diamètre (équivalent) « important », ont généralement aussi une masse de quelques dizaines de grammes à quelques centaines de grammes),
   de type pastille (de telles pastilles ont généralement une masse de quelques dixièmes de gramme à quelques grammes. Elles présentent généralement un diamètre équivalent de quelques mm (par exemple 5 mm) à 30 mm, pour une épaisseur, constante ou pas, de quelques mm (par exemple 5 mm) à 30 mm),
   de type granulé (de tels granulés présentent généralement un diamètre médian (en masse) supérieur à 500 µm, par exemple d'environ 700 µm. Ils ont généralement une masse de quelques milligrammes), ou/et
   de type grain (de poudre pulvérulente : de tels grains présentent généralement un diamètre médian (en masse) inférieur ou égal à 500 µm, par exemple d'environ 350 µm. Ils ont aussi généralement une masse de quelques milligrammes) ;
- présentant une composition de type : composant(s) oxydant(s) inorganique(s) + composant(s) réducteur(s) hydrogéné(s) (voir l'introduction du présent texte). En tout état de cause, leur combustion libère un gaz hydrogéné renfermant au moins 70 % en volume d'hydrogène.

Conviennent notamment pour la mise en oeuvre (de la phase de démarrage) du procédé de l'invention, les chargements pyrotechniques constitués d'au moins un produit pyrotechnique renfermant, pour au moins 96 % de sa masse, au moins un composant oxydant inorganique et au moins un composant réducteur hydrogéné choisi parmi les hydrures inorganiques, le borazane et les polyaminoboranes. Le au moins un composant oxydant inorganique (généralement un unique composant oxydant inorganique est présent mais la présence d'au moins deux en mélange ne saurait être exclue) et le au moins un composant réducteur hydrogéné spécifique (généralement un unique composant réducteur hydrogéné tel qu'identifié ci-dessus est présent mais la présence d'au moins deux en mélange ne saurait être exclue) représentent donc au moins 96 % en masse (voire au moins 98 % en masse, voire 100 % en masse) de la masse du(des) produit(s) pyrotechnique(s) avantageusement utilisé(s) pour générer, selon l'invention, l'hydrogène. L'éventuel complément à 100 % est en général constitué d'additifs, type auxiliaires de procédé, de stabilité, de désensibilisation à l'électricité statique (tel SiO₂) et/ou modificateurs de balistique, de combustion. La présence d'impuretés n'est pas exclue. La présence d'un liant organique, à faible taux, n'est également pas totalement exclue dans la mesure où, dans le cadre de la mise en oeuvre du procédé de l'invention, une très grande pureté de l'hydrogène généré n'est pas forcément requise. On a mentionné un gaz hydrogéné renfermant au moins 70 % en hydrogène.

En référence audit au moins un composant réducteur hydrogéné, on peut, de façon nullement limitative, préciser ce qui suit.
1) Le au moins un hydrure inorganique susceptible d'être présent dans la composition des produits pyrotechniques utilisés est avantageusement un borohydrure, très avantageusement un borohydrure alcalin ou alcalino-terreux. De préférence, ledit au moins un hydrure inorganique est choisi parmi le borohydrure de sodium, de lithium ou de magnésium. Les produits pyrotechniques utilisés dans le procédé de l'invention renferment donc de préférence dans leur composition, comme hydrure inorganique, NaBH₄, LiBH₄ ou Mg(BH₄)₂.
2) Le au moins un composé réducteur hydrogéné consiste toutefois préférentiellement en le borazane ou un polymère de l'aminoborane (un polyaminoborane). De façon particulièrement préférée, le borazane est l'unique composé réducteur hydrogéné présent dans la composition des produits pyrotechniques utilisés.

En référence audit au moins un composant oxydant inorganique, on peut, de façon nullement limitative, préciser ce qui suit.

Il est avantageusement choisi parmi ceux utilisés selon l'art antérieur dans le domaine technique des piles à combustible ; i.e. parmi :
- les perchlorates (il consiste très avantageusement en le perchlorate d'ammonium),
- les dinitroamidures (« dinitramides ») (il consiste très avantageusement en le dinitroamidure d'ammonium),
- les nitrates (il consiste très avantageusement en le nitrate de strontium), et
- les oxydes métalliques (il consiste avantageusement en l'oxyde de fer (Fe₂O₃), l'oxyde de vanadium (V₂O₅), l'oxyde d'aluminium (Al₂O₃), l'oxyde de titane (TiO₂), l'oxyde de manganèse (MnO₂), de préférence en l'oxyde de fer (Fe₂O₃)).

Les produits pyrotechniques (constituant les chargements pyrotechniques) utilisés dans le procédé de l'invention (plus exactement pour la phase de démarrage dudit procédé de l'invention, i.e. pour la phase de mise en régime de la pile) renferment donc très avantageusement NH₄ClO₄, NH₄N(NO₂)₂, Sr(NO₃)₂ ou Fe₂O₃ (à titre de composé oxydant).

Le(s) produit(s) pyrotechnique(s) utilisé(s) (constituant(s) des chargements pyrotechniques A) renferme(nt) de préférence dans leur composition :
- de 40 à 80 % en masse d'au moins un composant réducteur hydrogéné tel qu'identifié ci-dessus (généralement d'un tel composant réducteur hydrogéné), et
- de 20 à 60 % en masse d'au moins un oxydant inorganique (généralement d'un tel oxydant inorganique).

Ils renferment, de façon particulièrement préférée :
- de 55 à 75 % en masse d'au moins un composant réducteur hydrogéné tel qu'identifié ci-dessus (généralement d'un tel composant réducteur hydrogéné), et
- de 25 à 45 % en masse d'au moins un oxydant inorganique (généralement d'un tel oxydant inorganique).

Il est, de manière générale, également très avantageux que le(s)dit(s) produit(s) pyrotechnique(s) renferme(nt) plus de 50% en masse de composé(s) réducteur(s) hydrogéné(s), encore plus avantageux que le(s)dit(s) produit(s) pyrotechnique(s) renferme(nt) plus de 70% en masse de composé(s) réducteur(s) hydrogéné(s). On a compris que le(s)dit(s) composé(s) réducteur(s) hydrogéné(s) présent(s) constitue(nt) la réserve d'hydrogène.

On rappelle ici, à toutes fins utiles, que le au moins un chargement pyrotechnique A utilisé pour la génération de l'hydrogène (par combustion auto-entretenue) peut être constitué d'au moins un produit pyrotechnique, se présentant sous la forme d'un bloc, d'un disque, d'une pastille, d'un granulé, et/ou d'un grain. Ledit au moins un produit pyrotechnique présente une forme quelconque, par exemple sphérique, ovoïde ou cylindrique. On comprend qu'il est généralement utilisé plusieurs grains, plusieurs granulés et une ou plusieurs pastilles, un ou plusieurs disques, un ou plusieurs blocs (souvent un unique bloc) pour la mise en régime de la pile ; l'utilisation de chargements de grande taille n'étant *a priori* pas nécessaire pour une telle (simple) mise en régime.

Les procédés d'obtention de ces produits pyrotechniques solides sont des procédés connus, décrits notamment dans les demandes de brevet EP identifiées en page 2 du présent texte.

Tous les produits constituant le chargement pyrotechnique A ne présentent pas forcément la même composition. Ils sont toutefois tous des « précurseurs d'hydrogène » au sens de l'invention (= générateurs par combustion auto-entretenue d'un gaz hydrogéné renfermant au moins 70 % en volume d'hydrogène).

Ledit au moins un chargement pyrotechnique brûle suite à son allumage. On donne ci-après des indications nullement limitatives sur des moyens d'allumage conventionnels susceptibles d'être utilisés.

On a indiqué que, pour le fonctionnement en régime stable de la pile, un gaz hydrogéné, renfermant au moins 85 % en volume d'hydrogène (gaz hydrogéné convenant à l'alimentation de piles à hydrogène), est généré par décomposition thermique d'au moins un chargement (non pyrotechnique) solide générateur de gaz hydrogéné (ladite décomposition thermique étant démarrée et entretenue par une partie de la chaleur produite par la pile en fonctionnement). Ces chargements non pyrotechniques solides générateurs de gaz hydrogénés sont ci-après référencés chargements B.

Lesdits chargements B peuvent consister en des chargements de l'art antérieur, constitués d'au moins un produit (une charge)
- de type conventionnel, i.e. de type bloc (de tels blocs monolithes ont généralement une masse de quelques dizaines de grammes à plusieurs centaines de grammes. Ils présentent généralement un diamètre (équivalent) et une épaisseur (longueur) supérieures à 5 cm. Ils peuvent notamment consister en des blocs substantiellement cylindriques présentant une hauteur de 50 à 120 mm et un diamètre équivalent de 50 à 120 mm),
   de type disque (de tels disques, présentant une épaisseur « faible » associée généralement à un diamètre (équivalent) « important », ont généralement une masse de quelques dizaines de grammes à quelques centaines de grammes),
   de type pastille (de telles pastilles ont généralement une masse de quelques dixièmes de gramme à quelques grammes. Elles présentent généralement un diamètre équivalent de quelques mm (par exemple 5 mm) à 30 mm, pour une épaisseur, constante ou pas, de quelques mm (par exemple 5 mm) à 30 mm),
   de type granulé (de tels granulés présentent généralement un diamètre médian (en masse) supérieur à 500 µm, par exemple d'environ 700 µm. Ils ont généralement une masse de quelques milligrammes), ou/et
   de type grain (de poudre pulvérulente : de tels grains présentent généralement un diamètre médian (en masse) inférieur ou égal à 500 µm, par exemple d'environ 350 µm. Ils ont aussi généralement une masse de quelques milligrammes) ;
- avec une composition, exempte de composé oxydant, renfermant essentiellement au moins un composant réducteur hydrogéné choisi parmi les hydrures inorganiques, le borazane et les polyaminoboranes. En tout état de cause, leur décomposition thermique (≠ combustion) libère un gaz hydrogéné renfermant au moins 85 % en volume d'hydrogène.

Conviennent particulièrement pour le fonctionnement en régime stable de la pile, les chargements (non pyrotechniques) constitués d'au moins un produit (non pyrotechnique) renfermant, pour au moins 95 % de sa masse, avantageusement pour au moins 99 % de sa masse, au moins un composant hydrogéné choisi parmi les hydrures inorganiques, le borazane et les polyaminoboranes. Le au moins un composant hydrogéné consiste généralement en un des composants ci-dessus : un hydrure (avantageusement un borohydrure), un polyaminoborane ou le borazane. Il consiste très avantageusement en le borazane (ledit borazane, dont la décomposition thermique démarre à basse température, est particulièrement adapté, dans le cadre de la mise en oeuvre du procédé de l'invention, pour alimenter en gaz hydrogéné les piles de type PEFMC (haute et basse températures) dont il a été question ci-dessus). Pour ce qui concerne les hydrures, la température de fonctionnement de la pile étant connu, on choisit, pour l'alimentation en hydrogène de ladite pile, un hydrure présentant une température de décomposition adéquate (i.e. susceptible d'être substantiellement décomposé par de chaleur provenant de la pile). L'éventuel complément à 100 % est en général constitué d'au moins un additif (par exemple de type auxiliaire de procédé, auxiliaire de stabilité) et/ou d'un enrobage stabilisant thermiquement le chargement.

Tous les produits constituant ledit chargement B ne présentent pas forcément la même composition. Ils sont toutefois tous « précurseurs d'hydrogène » au sens de l'invention (= générateurs par décomposition thermique d'un gaz hydrogéné renfermant au moins 85 % en volume d'hydrogène).

Les procédés d'obtention des produits solides constitutifs des chargements B sont connus de l'homme du métier. Ils sont du type des procédés d'obtention des produits solides constitutifs des chargements A (voir ci-dessus), la composition desdits produits solides constitutifs des chargements B ne renfermant évidemment pas de composant oxydant inorganique.

On a indiqué ci-dessus que le borazane constitue avantageusement le (l'unique) composant réducteur hydrogéné du au moins un produit pyrotechnique constituant le chargement A et que le borazane constitue aussi avantageusement le (l'unique) composant hydrogéné du au moins un produit non pyrotechnique constituant le chargement B. Ainsi, selon une variante particulièrement préférée, le procédé de l'invention est mis en oeuvre avec des chargements A et B, tels que précisés ci-après : le au moins un chargement pyrotechnique solide (A) générateur de gaz hydrogéné par combustion auto-entretenue est un chargement pyrotechnique constitué d'au moins un produit pyrotechnique renfermant, pour 40 à 80 % de sa masse (de préférence 55 à 75 %) de sa masse, du borazane, à titre d'unique composant réducteur hydrogéné, et le au moins un chargement solide (B) générateur de gaz hydrogéné par décomposition thermique est un chargement constitué d'au moins un produit renfermant, pour au moins 95 % de sa masse, avantageusement pour au moins 99 % de sa masse, du borazane (à titre d'unique composant hydrogéné). Dans le cadre de cette variante préférée, le borazane est l'unique précurseur d'hydrogène utilisé. Du borazane, en présence d'au moins un oxydant (chargement A), est tout d'abord mis en combustion, pour la mise en régime de la pile. Ensuite, pour le fonctionnement en régime stable de ladite pile, du borazane (chargement B) est décomposé thermiquement.

Dans le cadre de la mise en oeuvre du procédé de l'invention, on peut assimiler la fonction du chargement pyrotechnique A à celle d'un « dispositif d'allumage » de la pile, on peut assimiler, de façon plus imagée, la fonction du chargement pyrotechnique A à celle d'une « allumette».

On a déjà invoqué la masse limitée du chargement A « d'allumage ». De façon nullement limitative, on peut préciser que, généralement, le rapport massique entre le au moins un chargement pyrotechnique solide (A) générateur de gaz hydrogéné par combustion auto-entretenue (« chargement d'allumage », d'amorçage de la pile) et le au moins un chargement solide (B) générateur de gaz hydrogéné par décomposition thermique (« chargement de fonctionnement ») est inférieur ou égal à 0,5, avantageusement inférieur ou égal à 0,1, très avantageusement inférieur ou égal à 0,05. Ce rapport massique concerne évidemment lesdits chargements (A) et (B) avant leur utilisation pour la mise en oeuvre du procédé de l'invention, i.e. avant leur consommation successive, respectivement par combustion auto-entretenue et par décomposition thermique.

Pour ce qui concerne le transfert de chaleur de la pile mise en régime vers le au moins un chargement non pyrotechnique B à décomposer thermiquement, l'homme du métier conçoit qu'il peut être mis en oeuvre selon différents modes, avec différents types de moyens conventionnels (agencement adéquat des parties du dispositif concernées induisant des échanges de chaleur et/ou présence d'échangeurs de chaleur, de type caloducs, de type échangeurs thermiques à tubes, de type échangeurs thermiques à plaques, de type échangeurs thermiques à spirales, ...).

Selon son deuxième objet, la présente invention concerne un dispositif de production d'électricité convenant tout particulièrement à la mise en oeuvre du procédé décrit ci-dessus (à la mise en oeuvre donc de successivement les phases de mise en régime et de fonctionnement en régime stable d'une pile à combustible).

Ledit dispositif comprend une pile à combustible, des moyens de mise en régime de ladite pile, et des moyens pour le fonctionnement en régime stable de ladite pile.

Les moyens de mise en régime de ladite pile comprennent :
- au moins une chambre de combustion convenant à la combustion auto-entretenue, en son sein, d'au moins un chargement pyrotechnique solide générateur de gaz hydrogéné renfermant au moins 70 % en volume d'hydrogène (chargement A (voir ci-dessus)), équipée de moyens d'allumage dudit au moins un chargement pyrotechnique solide, et
- des moyens de communication reliant ladite au moins une chambre de combustion et ladite pile, équipés de moyens de traitement du gaz généré par la combustion auto-entretenue dudit au moins un chargement pyrotechnique solide, pour la délivrance à ladite pile dudit gaz hydrogéné généré et traité.

En référence à ladite au moins une chambre de combustion équipée de moyens d'allumage (voir ci-dessus), on peut préciser, de façon nullement limitative, ce qui suit. Une telle chambre de combustion est *per se* connue. Elle est généralement constituée d'un ensemble mécanique équipé donc de moyens d'allumage. Les moyens d'allumage sont généralement constitués d'un allumeur (i.e. d'un module d'initiation ; un tel module déclenche avantageusement l'allumage par sollicitation mécanique (afin d'éviter toute consommation superflue d'énergie électrique). Un tel module comprend donc avantageusement un relais piézo-électrique ou un percuteur à amorce), en liaison avec le système utilisateur par l'intermédiaire d'un passage étanche supportant la pression de fonctionnement. Lesdits moyens d'allumage comprennent éventuellement une charge (pastille) pyrotechnique relais d'allumage. Dans le volume interne de ladite au moins une chambre de combustion (de l'ensemble mécanique), un dispositif de maintien ou de stabilisation (du type panier, par exemple) du(des) chargement(s) pyrotechnique(s) (dont les différents éléments constitutifs peuvent être en vrac ou arrangés) est généralement agencé (de façon à limiter l'encombrement du(des) chargement(s) pyrotechnique(s), à limiter les sollicitations mécaniques du(des)dit(s) chargement(s) (des éléments constitutifs de celui-ci(de ceux-ci), s'il n'est(ne sont) pas monobloc) en réponse aux vibrations du système et à retenir les résidus de combustion). La au moins une chambre de combustion comporte évidemment (au moins) un orifice de délivrance pour la délivrance (sous pression) des gaz générés en son sein (à haute pression), délivrance dans les moyens de communication la reliant à la pile. Lesdits moyens de communication consistent essentiellement en au moins une canalisation qui peut être qualifiée de première(s) canalisation(s).

Les moyens de traitement du gaz généré rendent celui-ci apte à alimenter la pile ; ils comprennent généralement conventionnellement des moyens de refroidissement, un détendeur, un filtre à particules et un filtre chimique (par exemple de type filtre adsorbant en zéolithe ou membranes métalliques de séparation de l'hydrogène (notamment en palladium ou alliage métallique renfermant du palladium)).

Les moyens pour le fonctionnement en régime stable de la pile comprennent :
- au moins une chambre de décomposition thermique convenant à la décomposition thermique, en son sein, d'au moins un chargement solide générateur de gaz hydrogéné renfermant au moins 85 % en volume d'hydrogène (chargement B (voir ci-dessus)),
- des moyens de communication reliant ladite au moins une chambre de décomposition thermique et ladite pile, équipés de moyens de traitement du gaz hydrogéné généré par la décomposition thermique dudit au moins un chargement solide, pour la délivrance à ladite pile dudit gaz hydrogéné généré et traité, et
- des moyens d'échange thermique pour assurer un transfert thermique de ladite pile vers ladite chambre de décomposition thermique.

La au moins une chambre de décomposition thermique est aussi *per se* connue. Elle n'a elle pas besoin d'être équipée de quelconque moyen d'allumage (de la chaleur produite par la pile mise en régime démarre et entretient la décomposition thermique). Dans le volume interne de ladite au moins une chambre de décomposition thermique, un dispositif de maintien ou de stabilisation (panier, par exemple) du(des) chargement(s) (dont les différents éléments constitutifs (la présence d'un unique bloc est toutefois expressément prévue) peuvent être en vrac ou arrangés) est généralement aussi agencé (pour, de la même façon, limiter l'encombrement du(des) chargement(s), limiter les sollicitations mécaniques du(des)dit(s) chargement(s) (des éléments constitutifs de celui-ci(de ceux-ci), s'il n'est(ne sont) pas monobloc) en réponse aux vibrations du système et retenir les résidus de décomposition thermique). La au moins une chambre de décomposition thermique comporte évidemment (au moins) un orifice de délivrance pour la délivrance (sous pression ou non) des gaz générés en son sein (sous pression ou non), délivrance dans les moyens de communication la reliant à la pile. Lesdits moyens consistent essentiellement en une canalisation qui peut être qualifiée de seconde(s) canalisation(s).

Les moyens de traitement du gaz généré rendent celui-ci apte à alimenter la pile ; ils peuvent se limiter à un filtre chimique (par exemple de type filtre adsorbant en zéolithe ou membranes métalliques de séparation de l'hydrogène (notamment en palladium ou alliage métallique renfermant du palladium)). Ils comprennent, si nécessaire, des moyens de dépressurisation (voir ci-dessus).

L'échange thermique, de la pile vers la chambre de décomposition thermique, est assuré par des moyens conventionnels (échangeurs thermiques de type caloducs, de type échangeurs thermiques à tubes, de type échangeurs thermiques à plaques, de type échangeurs thermiques à spirales, ...) et/ou par un agencement adéquat des parties du dispositif concernées. On parle généralement de moyens d'échange thermique.

Comme indiqué ci-dessus, on conçoit que les mêmes moyens puissent être utilisés successivement pour traiter les gaz hydrogénés générés pyrotechniquement puis ceux générés non pyrotechniquement.

Le dispositif de l'invention comprend avantageusement une unique chambre de combustion reliée à la pile et une unique chambre de décomposition thermique reliée à la pile. La liaison chambre de combustion/pile, pour le transfert du gaz hydrogéné de démarrage, d'une part (*via* au moins une première canalisation) et les liaisons 1) chambre de décomposition thermique/pile, pour le transfert du gaz hydrogéné de fonctionnement (*via* au moins une seconde canalisation) et 2) pile/ chambre de décomposition thermique pour le transfert de chaleur, d'autre part, constituent évidemment les clés de l'invention.

On se propose maintenant d'illustrer l'invention, de façon nullement limitative, sous ses aspects de procédé et de dispositif, par la figure annexée.

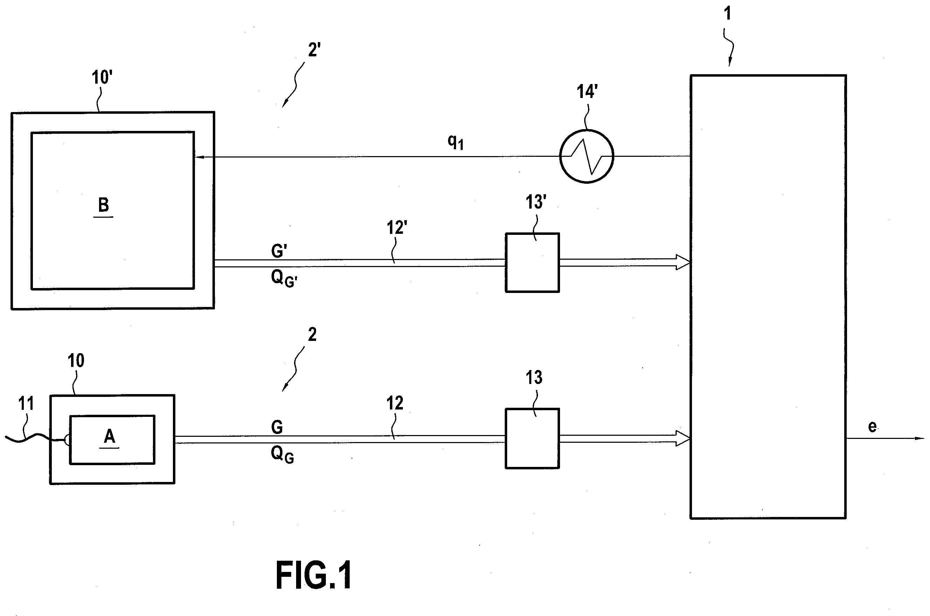

Sur ladite figure 1, on a représenté, de façon schématique :
- en 1 une pile à combustible produisant, en fonctionnement, de l'électricité e et de la chaleur,
- en 2 les moyens de mise en régime de ladite pile 1, et
- en 2' les moyens pour le fonctionnement en régime stable de ladite pile 1.

Les moyens 2 de mise en régime de ladite pile 1 comprennent :
- la chambre de combustion 10 convenant à la combustion auto-entretenue, en son sein, d'un chargement pyrotechnique solide A générateur de gaz hydrogéné, équipée de moyens d'allumage 11 dudit chargement pyrotechnique solide A, et
- des moyens de communication, i.e. la canalisation 12, reliant ladite chambre de combustion 10 et ladite pile 1. Ladite canalisation 12 est équipée de moyens de traitement 13 du gaz hydrogéné G généré par la combustion auto-entretenue dudit chargement pyrotechnique solide A. Ledit gaz hydrogéné G est généré chaud (d'où l'indication de la quantité de chaleur Q_{G} qu'il transporte), sous pression et il transporte des particules solides et des espèces gazeuses poisons pour le catalyseur de la pile 1. Ledit gaz G traité (refroidi, dépressurisé, filtré (pour « éliminer » et lesdites particules solides et lesdites espèces gazeuses poisons)) convient pour alimenter la pile 1.

La pile 1 est donc, selon le procédé de l'invention, mise en régime, avec les moyens 2 décrits ci-dessus, grâce à la combustion du chargement pyrotechnique A, plus exactement grâce au gaz hydrogéné G résultant de ladite combustion.

Les moyens 2' pour le fonctionnement en régime stable de la pile 1 comprennent :
- une chambre de décomposition thermique 10' convenant à la décomposition thermique, en son sein, d'un chargement solide B générateur de gaz hydrogéné,
- des moyens de communication, i.e. la canalisation 12', reliant ladite chambre de décomposition thermique 10' et ladite pile 1. Ladite canalisation 12' est équipée de moyens de traitement 13' du gaz hydrogéné G' généré par la décomposition thermique du chargement solide B. Ledit gaz hydrogéné est généré « chaud » (d'où l'indication de la quantité de chaleur Q_{G'} qu'il transporte ; on comprend toutefois que Q_{G'} << Q_{G}), éventuellement sous pression et il transporte des espèces gazeuses poisons pour le catalyseur de la pile 1. Ledit gaz G' traité (filtré (pour « éliminer » lesdites espèces gazeuses poisons), éventuellement dépressurisé) convient pour alimenter la pile 1, et
- des moyens d'échange thermique 14' pour assurer un transfert thermique de ladite pile 1 vers ladite chambre de décomposition thermique 10'. On a référencé q₁ la quantité de chaleur transférée.

La pile 1, selon le procédé de l'invention, fonctionne donc en régime stable (une fois la pile 1 mise en régime (voir ci-dessus)), avec les moyens 2' décrits ci-dessus, grâce à la décomposition thermique du chargement (non pyrotechnique) B, plus exactement grâce au gaz hydrogéné G' résultant de ladite décomposition thermique. Ladite décomposition thermique est assurée (démarrée et entretenue) par la quantité de chaleur q₁.

A titre purement illustratif, des précisions sur un mode de mise en oeuvre du procédé de l'invention sont données ci-après.

La pile considérée est une pile de type PEMFC fonctionnant à haute température (température de fonctionnement optimum de 160°C). Elle délivre 8 kW d'énergie électrique en continu (et en même temps 8 kW d'énergie thermique) lorsqu'elle est alimentée en hydrogène à un débit de 0,2 g/s. Alimentée à un tel débit, il lui faut 2 min de mise en régime (pour que sa température passe de 20°C (température ambiante) à 160°C (sa température de fonctionnement optimum)).

Pour faire fonctionner ladite pile pendant 30 min, on utilise, selon l'invention, successivement, les chargements A et B ci-après.

**Chargement A** utilisé pour la phase de mise en régime :
un bloc de composition 70 % borazane/30 % nitrate de strontium (% massiques), brûlant selon une combustion auto-entretenue avec un rendement en hydrogène de 11 % (en masse),
de forme cylindrique, avec un diamètre de 60 mm et une hauteur de 85 mm,
de masse volumique 0,958 g/cm³.
Un tel bloc de 230 g convient pour fournir 25 g d'hydrogène, ce qui est suffisant pour le démarrage de la pile.

**Chargement B** utilisé pour le fonctionnement en régime stable :
cinq blocs superposés constitués (à 100 %) de borazane, se décomposant à 160°C avec un rendement en hydrogène de 13 % (en masse) (à cette température, le borazane libère ses deux premières moles d'hydrogène),
de forme cylindrique, avec, chacun, un diamètre de 90 mm et une hauteur de 110 mm,
de masse volumique 0,750 g/cm³.

Le chargement (constitué des cinq blocs superposés) d'une masse totale de 2,624 kg convient pour fournir 341 g d'hydrogène, ce qui est suffisant pour le fonctionnement de la pile pendant 28 min.

## Revendications

1. Procédé de production d'électricité (e) par une pile à combustible (1), comprenant successivement :
- une phase de mise en régime de ladite pile (1), et
- un fonctionnement en régime stable de ladite pile (1), au cours duquel ladite pile (1), alimentée en un gaz hydrogéné (G'), produit de l'électricité (e) et de la chaleur,
**caractérisé en ce que**, pour sa mise en régime, ladite pile (1) est alimentée en un gaz hydrogéné (G), renfermant au moins 70 % en volume d'hydrogène, généré par combustion auto-entretenue d'au moins un chargement pyrotechnique solide (A) générateur de gaz hydrogéné ; et
**en ce que**, durant son fonctionnement en régime stable, ladite pile (1) est alimentée en un gaz hydrogéné (G'), renfermant au moins 85 % en volume d'hydrogène, généré par décomposition thermique d'au moins un chargement solide (B) générateur de gaz hydrogéné ; une partie (q₁) de la chaleur produite par ladite pile (1) en fonctionnement étant transférée audit au moins un chargement solide (B) pour le démarrage et l'entretien de sa décomposition thermique.

2. Procédé selon la revendication 1, **caractérisé en ce que** ladite phase de mise en régime comprend :
+ la combustion auto-entretenue dudit au moins un chargement pyrotechnique solide (A) pour générer le gaz hydrogéné (G) renfermant au moins 70 % en volume d'hydrogène ;
+ le traitement dudit gaz hydrogéné (G) généré par combustion auto-entretenue pour qu'il convienne à l'alimentation de ladite pile (1) ;
+ l'alimentation de ladite pile (1) avec ledit gaz hydrogéné généré (G) traité ; et
**en ce que** ledit fonctionnement en régime stable comprend :
+ la décomposition thermique, avec une partie (q₁) de la chaleur produite par ladite pile (1), dudit au moins un chargement solide (B), pour générer le gaz hydrogéné (G') renfermant au moins 85 % en volume d'hydrogène ;
+ le traitement dudit gaz hydrogéné généré (G') par décomposition thermique pour qu'il convienne à l'alimentation de ladite pile (1) ; et
+ l'alimentation de ladite pile (1) avec ledit gaz hydrogéné généré (G') traité.

3. Procédé selon la revendication 1 ou 2, **caractérisé en ce que** le traitement dudit gaz hydrogéné (G) produit par combustion auto-entretenue consiste essentiellement en un refroidissement, une dépressurisation, une filtration chimique et une filtration particulaire et **en ce que** le traitement dudit gaz hydrogéné (G') produit par décomposition thermique comprend au moins une filtration chimique.

4. Procédé selon l'une quelconque des revendications 1 à 3, **caractérisé en ce que** ledit au moins un chargement pyrotechnique solide (A) générateur de gaz hydrogéné par combustion auto-entretenue est un chargement pyrotechnique constitué d'au moins un produit pyrotechnique renfermant, pour au moins 96 % de sa masse, au moins un composant oxydant inorganique et au moins un composant réducteur hydrogéné choisi parmi les hydrures inorganiques, le borazane et les polyaminoboranes.

5. Procédé selon la revendication 4, **caractérisé en ce que** ledit au moins un composant réducteur hydrogéné choisi parmi les hydrures inorganiques est choisi parmi les borohydrures inorganiques, avantageusement les borohydrures alcalins et alcalino-terreux, très avantageusement les borohydrures de sodium, de lithium et de magnésium.

6. Procédé selon la revendication 4, **caractérisé en ce que** ledit au moins un composant réducteur hydrogéné est choisi parmi le borazane et les polyaminoboranes ; **en ce que** ledit au moins un composant réducteur hydrogéné consiste avantageusement en le borazane.

7. Procédé selon l'une quelconque des revendications 4 à 6, **caractérisé en ce que** ledit au moins un composant oxydant inorganique est choisi parmi les perchlorates, les dinitroamidures, les nitrates et les oxydes métalliques ; avantageusement parmi le perchlorate d'ammonium, le dinitroamidure d'ammonium, le nitrate de strontium et l'oxyde de fer.

8. Procédé selon l'une quelconque des revendications 4 à 7, **caractérisé en ce que** ledit au moins un produit pyrotechnique renferme :
- de 40 à 80 % en masse dudit au moins un composant réducteur hydrogéné (généralement d'un tel composant réducteur hydrogéné), et
- de 20 à 60 % en masse dudit au moins un composant oxydant inorganique (généralement d'un tel composant oxydant inorganique) ;
**en ce que** ledit au moins un produit pyrotechnique renferme avantageusement :
- de 55 à 75 % en masse dudit au moins un composant réducteur hydrogéné (généralement d'un tel composant réducteur hydrogéné), et
- de 25 à 45 % en masse dudit au moins un composant oxydant inorganique (généralement d'un tel composant oxydant inorganique).

9. Procédé selon l'une quelconque des revendications 1 à 8, **caractérisé en ce que** ledit au moins un chargement solide (B) générateur de gaz hydrogéné par décomposition thermique est un chargement constitué d'au moins un produit renfermant, pour au moins 95 % de sa masse, avantageusement pour au moins 99 % de sa masse, au moins un composant hydrogéné choisi parmi les hydrures inorganiques, le borazane et les polyaminoboranes ; ledit au moins un composant hydrogéné consistant avantageusement en le borazane.

10. Procédé selon l'une quelconque des revendications 1 à 9, **caractérisé en ce que** ledit au moins un chargement pyrotechnique solide (A) générateur de gaz hydrogéné par combustion auto-entretenue est un chargement pyrotechnique constitué d'au moins un produit pyrotechnique renfermant, pour 40 à 80 % de sa masse, du borazane, à titre d'unique composant réducteur hydrogéné, et **en ce que** ledit au moins un chargement solide (B) générateur de gaz hydrogéné par décomposition thermique est un chargement constitué d'au moins un produit renfermant, pour au moins 95 % de sa masse, avantageusement pour au moins 99 % de sa masse, du borazane.

11. Procédé selon l'une quelconque des revendications 1 à 10, **caractérisé en ce que** ledit au moins un chargement pyrotechnique solide (A) générateur de gaz hydrogéné par combustion auto-entretenue et ledit au moins un chargement solide (B) générateur de gaz hydrogéné par décomposition thermique présentent, avant leur consommation, un rapport massique inférieur ou égal à 0,5, avantageusement inférieur ou égal à 0,1, très avantageusement inférieur ou égal à 0,05.

12. Dispositif de production d'électricité (e), convenant à la mise en oeuvre du procédé selon l'une quelconque des revendications 1 à 11, comprenant :
- une pile à combustible (1),
- des moyens de mise en régime (2) de ladite pile (1), et
- des moyens pour le fonctionnement en régime stable (2') de ladite pile (1),
**caractérisé en ce que** lesdits moyens de mise en régime (2) de ladite pile (1) comprennent :
- au moins une chambre de combustion (10) convenant à la combustion auto-entretenue, en son sein, d'au moins un chargement pyrotechnique solide (A) générateur de gaz hydrogéné renfermant au moins 70 % en volume d'hydrogène, équipée de moyens d'allumage (11) dudit au moins un chargement pyrotechnique solide (A), et
- des moyens de communication (12) reliant ladite au moins une chambre de combustion (10) et ladite pile (1), équipés de moyens de traitement (13) du gaz généré par la combustion auto-entretenue dudit au moins un chargement pyrotechnique solide (A), pour la délivrance à ladite pile (1) dudit gaz hydrogéné (G) généré et traité ; et
**en ce que** lesdits moyens pour le fonctionnement en régime stable (2') de ladite pile (1) comprennent :
- au moins une chambre de décomposition thermique (10') convenant à la décomposition thermique, en son sein, d'au moins un chargement solide (B) générateur de gaz hydrogéné renfermant au moins 85 % en volume d'hydrogène,
- des moyens de communication (12') reliant ladite au moins une chambre de décomposition thermique (10') et ladite pile (1), équipés de moyens de traitement (13') du gaz hydrogéné (G') généré par la décomposition thermique dudit au moins un chargement solide (B), pour la délivrance à ladite pile (1) dudit gaz hydrogéné (G') généré et traité, et
- des moyens d'échange thermique (14') pour assurer un transfert thermique de ladite pile (1) vers ladite chambre de décomposition thermique (10'),

## Patentansprüche

1. Verfahren zum Erzeugen von Elektrizität (e) mit einer Brennstoffzelle (1), umfassend aufeinanderfolgend:
- eine Phase des Versetzens der Zelle (1) in den Betriebszustand und
- ein Betreiben der Zelle (1) im stabilen Betriebszustand, während welchem die Zelle (1), die mit einem Wasserstoffgas (G') versorgt wird, Elektrizität (e) und Wärme erzeugt,
**dadurch gekennzeichnet, dass** zum Versetzen in ihren Betriebszustand die Zelle (1) mit einem Wasserstoffgas (G) versorgt wird, das mindestens 70 Vol.-% Wasserstoff umfasst und durch selbstunterhaltende Verbrennung mindestens einer festen pyrotechnischen Ladung (A) erzeugt wird, die Wasserstoffgas erzeugt, und
dadurch, dass während ihres Betriebs im stabilen Betriebszustand die Zelle (1) mit einem Wasserstoffgas (G') versorgt wird, das mindestens 85 Vol.-% Wasserstoff umfasst, und das durch thermische Zersetzung mindestens einer festen Ladung (B) erzeugt wird, die Wasserstoffgas erzeugt, wobei ein Teil (q₁) der von der Zelle (1) im Betrieb erzeugten Wärme zu der mindestens einen festen Ladung (B) zum Starten und Aufrechterhalten ihrer thermischen Zersetzung transferiert wird.

2. Verfahren nach Anspruch 1, **dadurch gekennzeichnet, dass** die Phase des Versetzens in den Betriebszustand umfasst:
+ die selbstunterhaltende Verbrennung der mindestens einen festen pyrotechnischen Ladung (A), um das Wasserstoffgas (G) zu erzeugen, das mindestens 70 Vol.-% Wasserstoff umfasst,
+ die Behandlung des Wasserstoffgases (G), das durch selbstunterhaltende Verbrennung erzeugt wird, damit es für die Versorgung der Zelle (1) geeignet ist,
+ die Versorgung der Zelle (1) mit dem behandelten erzeugten Wasserstoffgas (G), und
dadurch, dass der Betrieb im stabilen Betriebszustand umfasst:
+ die thermische Zersetzung, mit einem Teil (q₁) der von der Zelle (1) erzeugten Wärme, der mindestens einen festen Ladung (B), um das Wasserstoffgas (G') zu erzeugen, das mindestens 85 Vol.-% Wasserstoff umfasst,
+ die Behandlung des durch thermische Zersetzung erzeugten Wasserstoffgases (G'), damit es für die Versorgung der Zelle (1) geeignet ist, und
- die Versorgung der Zelle (1) mit dem behandelten erzeugten Wasserstoffgas (G').

3. Verfahren nach Anspruch 1 oder 2, **dadurch gekennzeichnet, dass** die Behandlung des Wasserstoffgases (G), das durch selbstunterhaltende Verbrennung erzeugt wird, im Wesentlichen aus einem Abkühlen, einer Entspannung und einer chemischen Filtration und einer Partikelfiltration besteht, und dadurch, dass die Behandlung des Wasserstoffgases (G'), das durch thermische Zersetzung erzeugt wird, mindestens eine chemische Filtration umfasst.

4. Verfahren nach einem der Ansprüche 1 bis 3, **dadurch gekennzeichnet, dass** die mindestens eine feste pyrotechnische Ladung (A), die Wasserstoffgas durch selbstunterhaltende Verbrennung erzeugt, eine pyrotechnische Ladung ist, die aus mindestens einem pyrotechnischen Produkt besteht, das, für mindestens 96 % seiner Masse, mindestens eine anorganische oxidierende Komponente und mindestens eine Wasserstoffreduktionskomponente umfasst, die aus anorganischen Hydriden, Borazan und Polyaminoboranen ausgewählt wird.

5. Verfahren nach Anspruch 4, **dadurch gekennzeichnet, dass** die mindestens eine Wasserstoffreduktionskomponente, die aus anorganischen Hydriden ausgewählt wird, aus anorganischen Borhydriden, vorteilhaft Alkali- und Erdalkaliborhydriden, sehr vorteilhaft Natrium-, Lithium- und Magnesiumborhydriden, ausgewählt wird.

6. Verfahren nach Anspruch 4, **dadurch gekennzeichnet, dass** die mindestens eine Wasserstoffreduktionskomponente aus Borazan und Polyaminoboranen ausgewählt wird, und dadurch, dass die mindestens eine Wasserstoffreduktionskomponente vorteilhaft aus Borazan besteht.

7. Verfahren nach einem der Ansprüche 4 bis 6, **dadurch gekennzeichnet, dass** die mindestens eine anorganische oxidierende Komponente aus Perchloraten, Dinitroamiden, Nitraten und Metalloxiden ausgewählt wird, vorteilhaft aus Ammoniumperchlorat, Ammoniumdinitroamid, Strontiumnitrat und Eisenoxid.

8. Verfahren nach einem der Ansprüche 4 bis 7, **dadurch gekennzeichnet, dass** das mindestens eine pyrotechnische Produkt umfasst:
- von 40 bis 80 Masse-% der mindestens einen
Wasserstoffreduktionskomponente (allgemein einer solchen Wasserstoffreduktionskomponente), und
- von 20 bis 60 Masse-% der mindestens einen anorganischen oxidierenden Komponente (allgemein einer solchen anorganischen oxidierenden Komponente),
und dadurch, dass das mindestens eine pyrotechnische Produkt vorteilhaft umfasst:
- von 55 bis 75 Masse-% der mindestens einen Wasserstoffreduktionskomponente (allgemein einer solchen Wasserstoffreduktionskomponente), und
von 25 bis 45 Masse-% der mindestens einen anorganischen oxidierenden Komponente (allgemein einer solchen anorganischen oxidierenden Komponente).

9. Verfahren nach einem der Ansprüche 1 bis 8, **dadurch gekennzeichnet, dass** die mindestens eine feste Ladung (B), die Wasserstoffgas durch thermische Zersetzung erzeugt, eine Ladung ist, die mindestens aus einem Produkt besteht, das, für mindestens 95 % seiner Masse, vorteilhaft für mindestens 99 % seiner Masse, mindestens eine Wasserstoffkomponente umfasst, die aus anorganischen Hydriden, Borazan und Polyaminoburanen ausgewählt wird, wobei die mindestens eine Wasserstoffkomponente vorteilhaft aus Borazan besteht.

10. Verfahren nach einem der Ansprüche 1 bis 9, **dadurch gekennzeichnet, dass** die mindestens eine feste pyrotechnische Ladung (A), die Wasserstoffgas durch selbstunterhaltende Verbrennung erzeugt, eine pyrotechnische Ladung ist, die aus mindestens einem festen pyrotechnischen Produkt besteht, das, für 40 bis 80 % seiner Masse, Borazan als einzige Wasserstoffreduktionskomponente umfasst, und dadurch, dass die mindestens eine feste Ladung (B), die Wasserstoffgas durch thermische Zersetzung erzeugt, eine Ladung ist, die aus mindestens einem Produkt besteht, das, für mindestens 95 % seiner Masse, vorteilhaft für mindestens 99 % seiner Masse, Borazan umfasst.

11. Verfahren nach einem der Ansprüche 1 bis 10, **dadurch gekennzeichnet, dass** die mindestens eine feste pyrotechnische Ladung (A), die Wasserstoffgas durch selbstunterhaltende Verbrennung erzeugt, und die mindestens eine feste Ladung (B), die Wasserstoffgas durch thermische Zersetzung erzeugt, vor ihrem Verbrauch, ein Masseverhältnis kleiner oder gleich 0,5 aufweisen, vorteilhaft kleiner oder gleich 0,1, sehr vorteilhaft kleiner oder gleich 0,05.

12. Vorrichtung zur Erzeugung von Elektrizität (e), welche für die Durchführung des Verfahrens nach einem der Ansprüche 1 bis 11 geeignet ist, umfassend:
- eine Brennstoffzelle (1),
- Mittel (2) zum Versetzen der Zelle (1) in den Betriebszustand und
- Mittel (2') für den Betrieb der Zelle (1) im stabilen Betriebszustand, **dadurch gekennzeichnet, dass** die Mittel (2) zum Versetzen der Zelle (1) in den Betriebszustand umfassen:
- mindestens eine Verbrennungskammer (10), welche für die selbstunterhaltende Verbrennung geeignet ist, in ihrem Inneren mindestens eine feste pyrotechnische Ladung (A), die Wasserstoffgas erzeugt und mindestens 70 Vol.-% Wasserstoff umfasst, und welche mit Zündmitteln (11) der mindestens einen festen pyrotechnischen Ladung (A) ausgestattet ist, und
- Kommunikationsmittel (12), welche die mindestens eine Verbrennungskammer (10) und die Zelle (1) verbinden und welche mit Mitteln (13) zur Behandlung des Gases ausgestattet sind, das durch selbstunterhaltende Verbrennung der mindestens einen festen pyrotechnischen Ladung (A) erzeugt wird, um der Zelle (1) das erzeugte und behandelte Wasserstoffgas (G) zuzuführen, und
dadurch, dass die Mittel (2') für den Betrieb der Zelle (1) im stabilen Betriebszustand umfassen:
- mindestens eine thermische Zersetzungskammer (10'), welche für die thermische Zersetzung geeignet ist, in ihrem Inneren mindestens eine feste Ladung (B), die Wasserstoffgas erzeugt, das mindestens 85 Vol.-% Wasserstoff umfasst,
- Kommunikationsmittel (12'), welche die mindestens eine thermische Zersetzungskammer (10') und die Zelle (1) verbinden und welche mit welche mit Mitteln (13') zur Behandlung des Wasserstoffgases (G') ausgestattet sind, das durch thermische Zersetzung der mindestens einen festen Ladung (B) erzeugt wird, um der Zelle (1) das erzeugte und behandelte Wasserstoffgas (G') zuzuführen, und
- Wärmeaustauschmittel (14'), um einen Wärmetransfer der Zelle (1) zur thermischen Zersetzungskammer (10') sicherzustellen.

## Claims

1. A process for generating electricity (e) with a fuel cell (1), comprising in succession:
- a start-up phase of said fuel cell (1), and
- a steady-state operation of said fuel cell (1), during which said fuel cell (1), supplied with a hydrogen-containing gas (G'), generates electricity (e) and heat,
**characterized in that**, for its start-up, said fuel cell (1) is supplied with a hydrogen-containing gas (G), containing at least 70% by volume of hydrogen, generated by self-sustaining combustion of at least one solid pyrotechnic charge (A) that generates hydrogen-containing gas; and
**in that**, during its steady-state operation, said fuel cell (1) is supplied with a hydrogen-containing gas (G'), containing at least 85% by volume of hydrogen, generated by thermal decomposition of at least one solid charge (B) that generates hydrogen-containing gas; a portion (q₁) of the heat produced by said fuel cell (1) in operation being transferred to said at least one solid charge (B) for starting and maintaining the thermal decomposition thereof.

2. The process according to claim 1, **characterized in that** said start-up phase comprises:
+ the self-sustaining combustion of said at least one solid pyrotechnic charge (A) in order to generate the hydrogen-containing gas (G) containing at least 70% by volume of hydrogen;
+ the treatment of said hydrogen-containing gas (G) generated by self-sustaining combustion so that it is suitable for supplying said fuel cell (1);
+ the supplying of said fuel cell (1) with said treated hydrogen-containing gas (G) generated; and
**in that** said steady-state operation comprises:
+ the thermal decomposition, with a portion (q₁) of the heat produced by said fuel cell (1), of said at least one solid charge (B), in order to generate the hydrogen-containing gas (G') containing at least 85% by volume of hydrogen;
+ the treatment of said hydrogen-containing gas (G') generated by thermal decomposition so that it is suitable for supplying said fuel cell (1); and
+ the supplying of said fuel cell (1) with said treated hydrogen-containing gas (G') generated.

3. The process according to claim 1 or 2, **characterized in that** the treatment of said hydrogen-containing gas (G) produced by self-sustaining combustion essentially consists of a cooling, a depressurization, a chemical filtration and a particulate filtration and **in that** the treatment of said hydrogen-containing gas (G') produced by thermal decomposition comprises at least one chemical filtration.

4. The process according to any one of claims 1 to 3, **characterized in that** said at least one solid pyrotechnic charge (A) that generates hydrogen-containing gas by self-sustaining combustion is a pyrotechnic charge consisting of at least one pyrotechnic product containing, for at least 96% of its weight, at least one inorganic oxidizing component and at least one hydrogen-containing reducing component selected from inorganic hydrides, borazane and polyaminoboranes.

5. The process according to claim 4, **characterized in that** said at least one hydrogen-containing reducing component selected from inorganic hydrides is selected from inorganic borohydrides, advantageously alkali metal and alkaline-earth metal borohydrides, very advantageously sodium, lithium and magnesium borohydrides.

6. The process according to claim 4, **characterized in that** said at least one hydrogen-containing reducing component is selected from borazane and polyaminoboranes; **in that** said at least one hydrogen-containing reducing component advantageously consists of borazane.

7. The process according to any one of claims 4 to 6, **characterized in that** said at least one inorganic oxidizing component is selected from perchlorates, dinitramides, nitrates and metal oxides; advantageously from ammonium perchlorate, ammonium dinitramide, strontium nitrate and iron oxide.

8. The process according to any one of claims 4 to 7, **characterized in that** said at least one pyrotechnic product contains:
- from 40% to 80% by weight of said at least one hydrogen-containing reducing component (generally of one such hydrogen-containing reducing component), and
- from 20% to 60% by weight of said at least one inorganic oxidizing component (generally of one such inorganic oxidizing component);
**in that** said at least one pyrotechnic product advantageously contains:
- from 55% to 75% by weight of said at least one hydrogen-containing reducing component (generally of one such hydrogen-containing reducing component), and
- from 25% to 45% by weight of said at least one inorganic oxidizing component (generally of one such inorganic oxidizing component).

9. The process according to any one of claims 1 to 8, **characterized in that** said at least one solid charge (B) that generates hydrogen-containing gas by thermal decomposition is a charge consisting of at least one product containing, for at least 95% of its weight, advantageously for at least 99% of its weight, at least one hydrogen-containing component selected from inorganic hydrides, borazane and polyaminoboranes; said at least one hydrogen-containing component advantageously consisting of borazane.

10. The process according to any one of claims 1 to 9, **characterized in that** said at least one solid pyrotechnic charge (A) that generates hydrogen-containing gas by self-sustaining combustion is a pyrotechnic charge consisting of at least one pyrotechnic product containing, for 40% to 80% of its weight, borazane, as sole hydrogen-containing reducing component, and **in that** said at least one solid charge (B) that generates hydrogen-containing gas by thermal decomposition is a charge consisting of at least one product containing, for at least 95% of its weight, advantageously for at least 99% of its weight, borazane.

11. The process according to any one of claims 1 to 10, **characterized in that** said at least one solid pyrotechnic charge (A) that generates hydrogen-containing gas by self-sustaining combustion and said at least one solid charge (B) that generates hydrogen-containing gas by thermal decomposition have, before they are consumed, a weight ratio less than or equal to 0.5, advantageously less than or equal to 0.1, very advantageously less than or equal to 0.05.

12. A device for generating electricity (e), suitable for the implementation of the process as claimed in any one of claims 1 to 11, comprising:
- a fuel cell (1),
- means (2) for start-up of said fuel cell (1), and
- means (2') for the steady-state operation of said fuel cell (1), **characterized in that** said means (2) for start-up of said fuel cell (1) comprise:
- at least one combustion chamber (10) suitable for the self-sustaining combustion, within it, of at least one solid pyrotechnic charge (A) that generates hydrogen-containing gas containing at least 70% by volume of hydrogen, equipped with means (11) for igniting said at least one solid pyrotechnic charge (A), and
- communication means (12) connecting said at least one combustion chamber (10) and said fuel cell (1), equipped with means (13) for treating the gas generated by the self-sustaining combustion of said at least one solid pyrotechnic charge (A), for the delivery to said fuel cell (1) of said generated and treated hydrogen-containing gas (G); and
**in that** said means (2') for the steady-state operation of said fuel cell (1) comprise:
- at least one thermal decomposition chamber (10') suitable for the thermal decomposition, within it, of at least one solid charge (B) that generates hydrogen-containing gas containing at least 85% by volume of hydrogen,
- communication means (12') connecting said at least one thermal decomposition chamber (10') and said fuel cell (1), equipped with means (13') for treating the hydrogen-containing gas (G') generated by the thermal decomposition of said at least one solid charge (B), for the delivery to said fuel cell (1) of said generated and treated hydrogen-containing gas (G'), and
- heat exchange means (14') for ensuring a heat transfer from said fuel cell (1) to said thermal decomposition chamber (10').
